# EUROPÄISCHE PATENTANMELDUNG

(11) **EP 3 147 022 A1**
(43) Veröffentlichungstag der Anmeldung: **29.03.2017**
(21) Anmeldenummer: 16185764.4
(22) Anmeldetag: 25.08.2016
(51) Int. Cl.: B01D 53/50, B01D 53/64

(54) **VERFAHREN ZUR VERBESSERTEN ABSCHEIDUNG VON QUECKSILBER AUS RAUCHGASEN IN NASSEN RAUCHGASENTSCHWEFELUNGSANLAGEN**

(30) Priorität: 25.09.2015 DE 102015218462
(71) Anmelder: EnBW Energie Baden-Württemberg AG, 76131 Karlsruhe (DE); Vattenfall Europe Generation AG & Co. KG, 03050 Cottbus (DE)
(72) Erfinder: Lange, Peter, 04275 Leipzig (DE); Stahr, Andreas, 04651 Bad Lausick (DE); Hilbert, Lothar, 04552 Borna (DE); Hörtinger, Thomas, 03048 Cottbus (DE); Ruff, Gerhard, 74248 Elhofen (DE); Strauß, Josef-Herbert, 73249 Wernau (DE); Thorwarth, Harald, 72074 Tübingen (DE)
(74) Vertreter: DREISS Patentanwälte PartG mbB

(57) **Zusammenfassung**

Es wird ein Verfahren vorgestellt, mit dem die Abscheidung von Quecksilber in bestehenden und neu zu errichtenden Rauchgasentschwefelungsanlagen verbessert wird.

Das Verfahren beinhaltet den Einsatz von bekannten und neuartigen Additiven, beschreibt zusätzliche Apparate und die optimierte Einstellung von Betriebsparametern zur besseren und sichereren Abscheidung von Quecksilber aus Rauchgasen.

Die beschriebenen Teilaspekte können, je nach Anforderungen und spezifischen Gegebenheiten, einzeln oder in Kombination eingesetzt werden.

## Beschreibung

### Hintergrund

Eine Quelle anthropogener Quecksilberemissionen sind mit Stein- und Braunkohle befeuerte Kraftwerke. Sollen diese Emissionen reduziert werden gibt es prinzipiell drei grundlegende Optionen. Option 1 ist der Einsatz von quecksilberarmen Kohlen. Dies ist aufgrund der Inhomogenität der Kohlen nur sehr begrenzt möglich und wirksam. Option 2 ist der Bau neuer, zusätzlicher Rauchgasreinigungsanlagen, wie z.B. der Bau eines Aktivkohle-Festbettfilters. Diese Anlagen verursachen erhebliche Investitionskosten, zusätzliche Betriebskosten und sind z.T. großtechnisch im Bereich der Reinigung von kohlestämmigen Rauchgasen noch nicht erprobt. Insbesondere für Großkraftwerke mit vorhandenen
Rauchgasreinigungsanlagen (Entstaubung, Entschwefelung und primärer bzw. sekundärer Entstickung) ist dies keine Option. Option 3 ist die Optimierung der bestehenden Anlagentechnik.

Grundlage für die Optimierung der bestehenden Anlagentechnik ist das Verständnis des Verhaltens von Quecksilber in Rauchgasreinigungsanlagen. Basierend auf dieser Grundlage geht es darum, das Verhalten von Quecksilber in den einzelnen Rauchgasreinigungsanlagen so zu beeinflussen, dass die Anteile des aus dem Rauchgas abgetrennten und mit den Nebenprodukten, vor allem aber mit den zu entsorgenden Reststoffen, ausgeschleusten Quecksilbers vergrößert und entsprechend die Anteile des mit dem Rauchgas emittierten Quecksilbers vermindert werden.

Quecksilber liegt nach der Verbrennung hauptsächlich als Hg⁰(g) elementar vor. Hg⁰(g) ist hochflüchtig und schlecht wasserlöslich. Aus diesem Grund ist es in den Rauchgasreinigungsanlagen von Kohlekraftwerken schlecht abscheidbar.

Wichtige Reaktionspartner sind die mit dem Brennstoff in den Verbrennungsprozess eingebrachten Halogene. Im Bereich der fossilen festen Brennstoffe ist Chlor als bedeutendster Reaktionspartner für Quecksilber besonders hervorzuheben und wird hier stellvertretend für andere Halogene genannt. Quecksilber reagiert mit Chlor sodass das wasserlösliche HgCl₂(g) entsteht. Dieses kann in nachgeschalteten Anlagenteilen der Rauchgasreinigung abgeschieden werden. Neben der Wasserlöslichkeit ist ein weiterer Aspekt die bessere Adsorption von HgCl₂(g) an Staubpartikeln.

Die Oxidationsraten von Quecksilber in kohlestämmigen Rauchgasen werden von diversen Parametern beeinflusst. Zuerst sind dies Temperaturen und Verweilzeiten. Je niedriger die Temperatur und je länger die Verweilzeit, desto höher die Oxidation. Weiterhin sind die mit dem Brennstoff in den Prozess eingebrachten Mengen an Chlor und damit die Chlorkonzentrationen im Rauchgas von Bedeutung. Hierbei gilt, dass mit zunehmender Chlorkonzentration die Quecksilberoxidation und damit der Anteil an wasserlöslichem HgC12 (g) zunehmen. Sind für die Stickoxid-Minderung sekundäre Maßnahmen in Form z.B. eines SCR-DeNOx Katalysators erforderlich, so bietet dieser eine weitere Möglichkeit die Hg-Oxidation zu verbessern. Hier kann der Katalysatorbetrieb und die Zusammensetzung der einzelnen Katalysator-Elemente hinsichtlich einer verbesserten Hg-Oxidation optimiert werden. Jedoch kann dabei die unerwünschte SO₂-SO₃-Konversion zunehmen. Außerdem verfügen vor allem Braunkohlekraftwerke aufgrund der primärseitigen Stickoxid-Minderung nicht über SCR-DeNOx Katalysatoren.

Mit höheren HgCl₂(g) Anteilen kann auch die Abscheidung in Staubfiltern verbessert werden. Dies kann weiterhin unterstützt werden durch niedrigere Filter-Betriebstemperaturen, eine verbesserte Staubabscheidung und höhere Anteile an unverbranntem Kohlenstoff sowie Kalzium, vor allem Freikalk, in den im Rauchgas befindlichen Stäuben.

Es ist jedoch zu beachten, dass es sich um eine komplexe Matrix mit sich gegenseitig beeinflussenden Parametern handelt. D.h. es gibt kein allgemeingültiges Rezept für die Steuerung von Hg-Massenströmen in Rauchgasreinigungsanlagen von Kohlekraftwerken.

Im Gegensatz zu den oben beschriebenen Rauchgasreinigungsanlagen zur Entstickung und Entstaubung sind nasse Rauchgasentschwefelungsanlagen und die darin ablaufenden chemischen Prozesse wesentlich komplexer und weniger umfassend beschrieben.

Für die Abscheidung von Quecksilber aus Rauchgasen sind jedoch Nasswäscher und in Kohlekraftwerken vor allem nasse Rauchgasentschwefelungsanlagen als Ein- oder Zweikreiswäscher von besonderer Bedeutung. Von deren Konstruktions- und Betriebsweise hängt die Abscheidung von Quecksilber wesentlich ab.

Rauchgasentschwefelungsanlagen (REA) dienen der Abscheidung von Schwefelverbindungen aus Rauchgasen und werden auch mit diesem Ziel betrieben. D.h. die Abscheidung von Quecksilber ist oft ein zufälliges Nebenprodukt des Anlagenbetriebs.

Aus der DE 41 23 258 C2 ist ein Verfahren zum Reinigen eines Abgases, das Schwefeldioxid und andere Schadstoffe enthält, bekannt. Dabei wird eine Nasswäsche mit einer calciumhaltigen Waschflüssigkeit durchgeführt, bei der das dadurch gebildete Calciumsulfit unter Zufuhr von Luft in Calciumsulfat (Gips) umgewandelt wird. Danach wird calciumsulfathaltige Waschflüssigkeit abgezogen und aus der abgezogenen Waschflüssigkeit Gips abgetrennt. Dem Rohgasstrom wird in vorgegebenem Abstand vor dem HCl-Wäscher, Natriummonosulfit zugeführt, das mit dem im Rohgas enthaltenen HgCl₂ zu einer unlösbaren Quecksilberverbindung reagiert, und zwar noch vor dem Eintritt in den Wäscher. Die dabei entstehende wasserunlösliche und sich in der ausgefällten Form von der Form der Gipskristalle unterscheidende Verbindung wird bei der Abtrennung des Gipses von der abgezogenen Waschflüssigkeit mit dem Abwasser abgeführt.

Aus der DE 10 2004 044 291 B4 ist ein Verfahren zur Rauchgasreinigung bekannt bei dem einem ersten Wäscher ein spezielles Hg-Fällungsmittel zugegeben wird.

Aus der EP 2 033 702 B1 ist ein Verfahren zur Rauchgasreinigung bekannt, das ein Adsorptionsmittel einsetzt, um das im Rauchgas enthaltene Quecksilber aus ersterem zu entfernen. Anschließend wird das Adsorptionsmittel regeneriert, welches in dem Sumpf des REA-Wäschers geleitet wird. Dieses Verfahren ist durchaus wirkungsvoll. Allerdings sind der apparative und damit auch der wirtschaftliche Aufwand zur Durchführung des Verfahrens relativ hoch. Dieser relativ hohe apparative Aufwand ist darin begründet, dass das eingesetzte Adsorptionsmittel, nachdem es das in den Rauchgasen ursprünglich enthaltene Quecksilber adsorbiert hat, wieder regeneriert wird. In anderen Worten: das Quecksilber wird von dem Adsorptionsmittel wieder getrennt und das regenerierte Adsorptionsmittel wird anschließend getrennt vom Quecksilber entsorgt.

Vor diesem Hintergrund liegt der Erfindung die Aufgabe zugrunde, ein Verfahren bereit zu stellen, mit dem bestehende und neu zu errichtende Rauchgasentschwefelungsanlagen apparativ ergänzt und hinsichtlich beeinflussbarer Betriebsparameter optimiert werden können, um die Abscheidung von Quecksilber aus Rauchgasen besser und sicherer durchzuführen, ohne die Entschwefelung zu verschlechtern und ohne die zur Verwertung bestimmten Nebenprodukte negativ zu beeinflussen. Die erfindungsgemäßen Maßnahmen sind mit geringem apparativem Aufwand und damit zu ökonomisch günstigeren Konditionen möglich.

Das erfindungsgemäße Verfahren kombiniert hierzu drei Teilaspekte, wobei je nach Anwendung und anlagenspezifischen Bedingungen auch einzelne Teilaspekte alleine oder in Kombination möglich sind.

Die Teilaspekte sind:
- Einsatz bekannter und neuartiger Additive zur Verhinderung von Re-Emission
- Zusätzliche Apparate und
- Optimierte Betriebsweise.

Das erfindungsgemäße Verfahren wird in Kombination mit einem Verfahren zum Entfernen von Schwefeldioxid aus Rauchgasen angewandt, bei dem die mit Schwefeldioxid beladenen Rauchgase in einen Nasswäscher eingeleitet werden, bei dem das Rauchgas in mindestens einer Stufe mit einer calciumhaltigen Waschflüssigkeit gewaschen wird und bei dem als Endprodukt Calciumsulfat (Gips) entsteht, dadurch gelöst, dass in einem ersten Verfahrensschritt das in den Rauchgasen enthaltene Quecksilber in die Waschflüssigkeit übergeht, der ein Fällungsmittel für Schwermetalle zugesetzt wird und dass das Fällungsmittel die in der Waschflüssigkeit enthaltenen Quecksilberionen unter Bildung eines schwerlöslichen Fällungsmittel-Quecksilber-Komplexes bindet. Weiterhin wird die o. g. Aufgabe dadurch gelöst, dass kontinuierlich ein Teilstrom der mit Gips und dem Fällungsmittel-Quecksilberkomplex beladenen Waschflüssigkeit aus dem Nasswäscher abgezogen und einer nachfolgenden Aufbereitungsstufe zugeführt wird. Diese ist dadurch gekennzeichnet, dass der in der Waschflüssigkeit enthaltene Gips in einem zweistufigen Verfahren in Hydrozyklonen abgeschieden und der im Oberlauf der zweiten Zyklonstufe vorliegende Fällungsmittel-Quecksilberkomplex zusammen mit Schmutzpartikeln unter Zugabe eines Flockungsmittels (optional weiteres Fällungsmittel) einem Eindicker zugeführt wird. Der mit dem Fällungsmittel-Quecksilberkomplex beladene Unterlauf des Eindickers wird entsorgt oder der Verwertung zugeführt, der quasi quecksilberfreie Oberlauf wird in den Nasswäscher zurückgeführt.

Durch das Verfahren ist es möglich, das in fester, flüssiger oder gasförmiger Form vorliegende Fällungsmittel gezielt in den Nasswäscher zu dosieren. Regelgröße kann u. a. die Quecksilberkonzentration im Rauchgas nach Nasswäscher sein. Durch den parallel zur Abscheidung laufenden Verfahrensschritt der Entfernung in der Wasseraufbereitungsanlage bleibt die Konzentration des Fällungsmittel-Quecksilberkomplexes im Nasswäscher selbst auf sehr geringem Niveau, so dass die Qualität des produzierten Gipses nicht beeinträchtigt wird.

Weil diese Verfahrensführung sehr einfach ist und nicht zwingend zusätzliche Apparate erfordert, kann durch den Einsatz des erfindungsgemäßen Verfahrens die Abscheiderate des Quecksilbers signifikant erhöht werden, ohne nennenswerte zusätzliche Betriebskosten zu verursachen. Konstruktive Änderungen an dem Nasswäscher sind nicht oder nur in unbedeutendem Maße erforderlich.

Das Fällungsmittel kann an verschiedenen Stellen dem Waschflüssigkeitskreislauf zugeführt werden. Erfindungsgemäß wird das Fällungsmittel so nah wie möglich an der Sprühebene zugesetzt. Es hat sich überraschenderweise bei Versuchen herausgestellt hierfür ist, dass Sulfit zu einer Reduktion von oxidiertem zu elementarem Quecksilber beitragen kann und über die Absorberhöhe direkt nach der Sprühebene die höchsten Sulfit-Konzentration auftreten. Um eine durch Sulfit induzierte Reduktion und damit eine Freisetzung von elementarem Quecksilber vor einer möglichen Fällung zu verhindern, ist das Fällungsmittel deshalb erfindungsgemäß möglichst nah an der Sprühebene zuzusetzen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Zeichnung

Es zeigen:
- Figur 1: Eine schematische Darstellung eines Nasswäschers,
- Figur 2: eine schematische Darstellung eines Nasswäschers mit apparativer Ergänzung und
- Figuren 3 bis 7:: Ergebnisse von Versuchen in Diagramm-Form

### Beschreibung der Ausführungsbeispiele

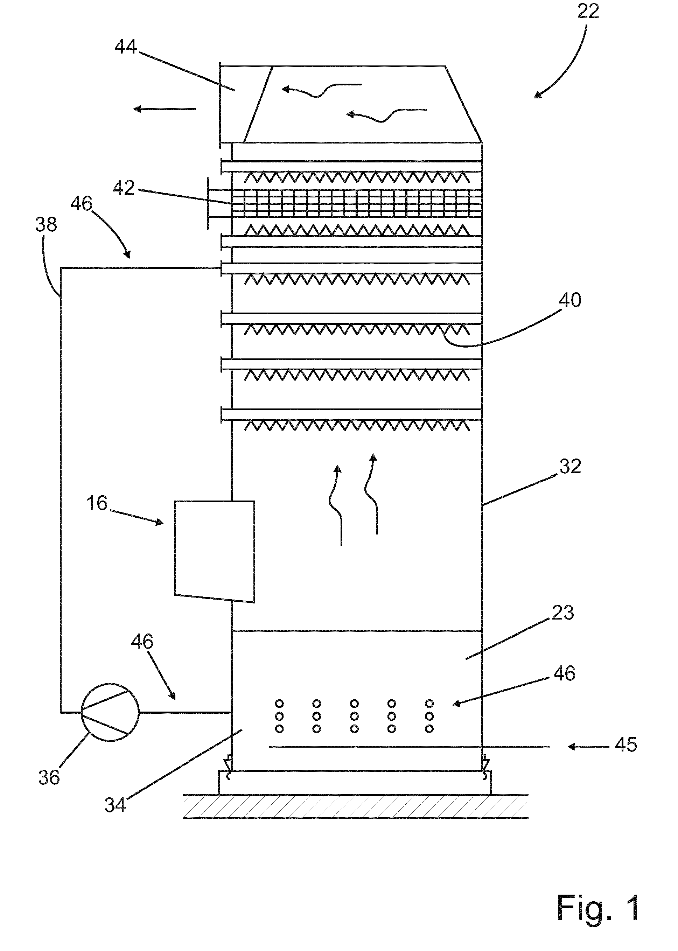

Figur 1 zeigt einen als Sprühturm 32 ausgeführten Nasswäscher 22. Das Rauchgas 16 tritt oberhalb eines Wäschersumpfs 34 in den Sprühturm 32 ein. Im Wäschersumpf 34 sammelt sich die Waschflüssigkeit 23. Eine Pumpe 36 fördert die Waschflüssigkeit 23 aus dem Wäschersumpf 34 über die Steigleitung 38 zu einer oder mehreren Sprühebenen 40.

In der Sprühebene 40 wird die Waschflüssigkeit 23 zu feinen Tropfen zerteilt. Die Tropfen bewegen sich im Gegenstrom zum Rauchgas 16 nach unten, in Richtung des Wäschersumpfs 34. Dabei werden im Rauchgas 16 enthaltene gasförmige Stoffe, wie beispielsweise Schwefeldioxid oder Quecksilberionen bzw. Quecksilber-Halogenverbindungen in der Waschflüssigkeit 23 gelöst und regnen mit den Tropfen in den Wäschersumpf 34 ab.

Das gereinigte Rauchgas 16 durchströmt im weiteren Verlauf einen Tropfenabscheider 42 und verlässt den Sprühturm 32 durch einen Austritt 44 an einem oberen Ende des Sprühturms 32. Der Tropfenabscheider 42 hält feinste Tröpfchen zurück, die mit dem Rauchgas 16 mitgerissen werden.

Das aus dem Rauchgas 16 abgeschiedene Schwefeldioxid (SO₂) reagiert mit der calciumhaltigen Waschflüssigkeit 23 zu Calciumsulfit (CaSO₃). In den Wäschersumpf 34 wird Luft 45 eingeblasen, so dass dort das mit den Tropfen abgeregnete Calciumsulfit (CaSO₃) mit dem in der Luft 45 enthaltenen Sauerstoff (O₂) zu Calciumsulfat (CaSO₄) aufoxidiert wird.

Das wasserlösliche Quecksilberchlorid wird zwischen den Sprühebenen 40 und dem Wäschersumpf 34 aus dem Rauchgas abgeschieden und mit den Tropfen der Waschflüssigkeit 23 in den Wäschersumpf 34 getragen. Hierbei kommt es bereits im Tropfen, aber vor allem im Wäschersumpf, zur Komplexierung des Quecksilbers. Darüber hinaus ist auch eine Adsorption an Feststoffen möglich.

Bei der Quecksilber-Komplexierung sind verschiedene, in der Literatur beschriebene Mechanismen denkbar.

Es ist aber auch bekannt, dass oxidiertes und in der Suspension gelöstes Quecksilber zu elementarem Quecksilber reduziert werden kann. Da diese Spezies im Gegensatz zu den Quecksilberionen nicht wasserlöslich ist, kann es nicht, wie diese, im Nasswäscher 22 abgeschieden werden, sondern wird wieder in die Gasphase freigesetzt. Diese Hg-Reemissionen verschlechtern die Hg-Abscheidung in nassen REA-Wäschern entscheidend. Erfindungsgemäß kann die Hg-Abscheidung in nassen REA-Wäschern entscheidend gesteigert werden, indem die Reduktion von gelöstem Quecksilber vermindert bzw. verhindert wird.

### Additive

Eine Reduktion der Quecksilberionen zu elementarem Quecksilber wird zum Beispiel dadurch verhindert, dass ein Fällungsmittel, beispielsweise das bekannte Trimercapto-S-Triazin-Natriumsalz (TMT15®), eingesetzt wird.

Beispielhafte Orte, an denen das Fällungsmittel in den Prozess eingebracht werden kann, sind in der Figur 1 durch das Bezugszeichen 46 gekennzeichnet. Das Fällungsmittel kann beispielsweise direkt in den Wäschersumpf 34 eingebracht werden. Der Einbringort 46 kann aber auch auf der Saugseite bzw. Druckseite der Pumpe 36 liegen oder in der Steigleitung 38. Vorzugsweise wird das Fällungsmittel so nahe wie möglich an einem Austritt der Suspension in der Sprühebene 40 eingebracht.

Die Wirkung des Trimercapto-S-Triazin-Natriumsalz (TMT15®) auf das Hg-Abscheideverhalten in nassen REA-Wäschern konnte in Laborversuchen nachgewiesen werden. Die Laborversuche, bei denen Absorbersuspension aus REA-Wäschern verwendet wurde, bilden verfahrenstechnisch die Verhältnisse im Kraftwerk ab.

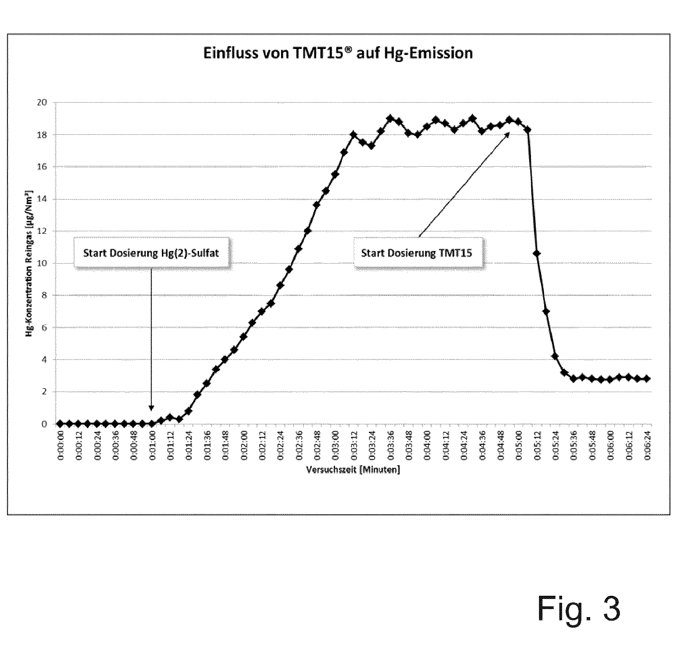

Ergebnisse dieser Laborversuche, welche die Wirksamkeit des erfindungsgemäßen Verfahrens eindrucksvoll belegen, sind in den Figuren 3 bis 7 dargestellt.

Im Rahmen der Versuche wurde bei konstanter Dosierrate ein lösliches Quecksilbersalz (Hg(2)-Sulfat) in den Absorbersumpf dosiert und so das Quecksilberemissionsniveau eingestellt (Figur 3). Nach dem Start der Dosierung von löslichem Hg(2)-Sulfat zum Zeitpunkt T = 1 min steigt die Quecksilberemission stetig an. Nach Erreichen eines Gleichgewichtzustands T = 5 min stellt sich ein konstantes Emissionsniveau ein. Nach Beginn der Dosierung von TMT fällt die Quecksilberemission auf ein konstant niedriges Niveau.

Ein neuartiges Additiv, welches alternativ oder parallel zu anderen Additiven erfindungsgemäß verwendet werden kann, ist Kalkmilch, die bei einem anderen chemischen Produktionsprozess als Nebenprodukt anfällt und geringe Mengen Kohlenstoff (< 1 Gew.-%) und weitere aktive Komponenten, wie z.B. sulfidische Schwefelverbindungen, enthält. Als besonders geeignet für das erfindungsgemäße Verfahren hat sich Kalkmilch aus Azetylen-Erzeugungsanlagen erwiesen.

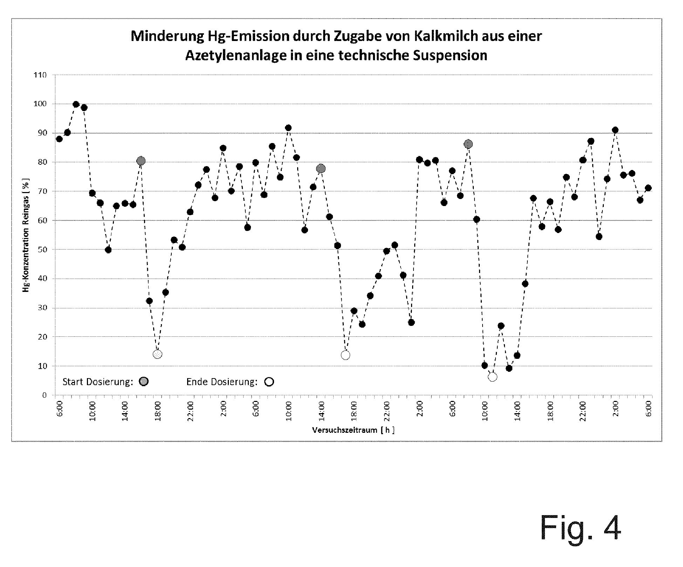

Wie Figur 4 beispielhaft zeigt, wurde bei einem mehrere Tage andauerndem Großversuch stundenweise Kalkmilch aus einer Azetylen-Erzeugungsanlage mit einem Anteil von 5% derjenigen Kalkmilch zugegeben, die zur Rauchgasentschwefelung erforderlich war. In Abhängigkeit von der Hg-Fracht im Rauchgas und des Kalkmilch-Gesamtverbrauchs konnte jeweils eine deutliche Minderung der Hg-Emission erreicht werden.
Auf diese Weise kann ein Nebenprodukt, welches anderenfalls kostenaufwendig entsorgt werden müsste, die Abscheiderate eines an sich bekannten Nasswäschers 22 erheblich verbessern.

Ein weiteres neuartiges Additiv, welches alternativ oder parallel zu anderen Additiven erfindungsgemäß verwendet werden kann ist sog. Elektrofilter-Asche (Trockenasche), welche bei der Verbrennung von Kohle, insbesondere von Braunkohle aus dem Mitteldeutschen Braunkohlerevier, anfällt. Diese Asche ist ebenfalls ein Nebenprodukt und kann als Adsorptionsmittel der REA-Suspension (Waschflüssigkeit 23) zugegeben werden. Dadurch wird das Quecksilber an die Asche gebunden und die Quecksilberkonzentration in der Waschflüssigkeit 23 wird gesenkt. Damit einhergehend wird die Hg-Abscheidung aus der Gasphase im Absorber bzw. im Nasswäscher 22 verbessert.

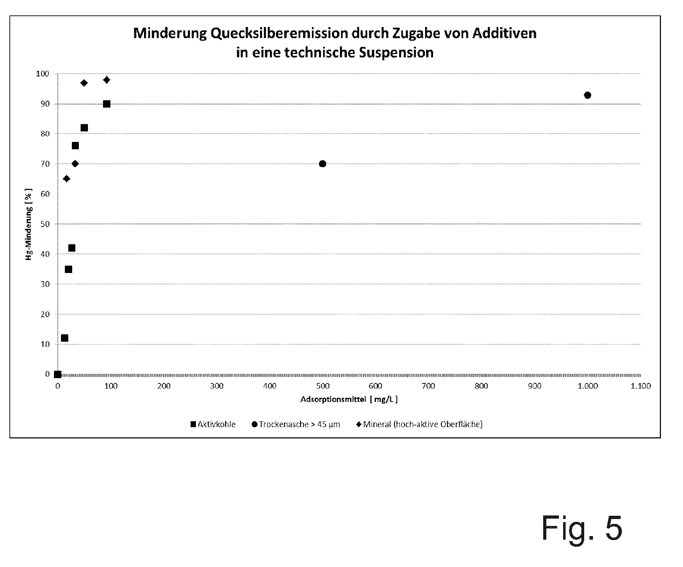

Figur 5 zeigt Ergebnisse aus Laborversuchen, bei denen der Einfluss einer Trockenasche mit einer vorzugsweise mittleren Korngröße von > 45 µm im Vergleich zu einer Aktivkohle bzw. einem Mineral mit hoch-aktiver Oberfläche auf die Quecksilberminderung hin untersucht wurde. Die Minderung der Gesamtquecksilber-Emissionen kann in Abhängigkeit von der Dosierrate Werte bis zu 90% erreichen. Damit ist das erfindungsgemäße Additiv genauso wirksam wie handelsübliche Produkte. Es zeigt sich allerdings, dass dafür höhere Dosiermengen nötig sind.

### Zusätzliche Apparate

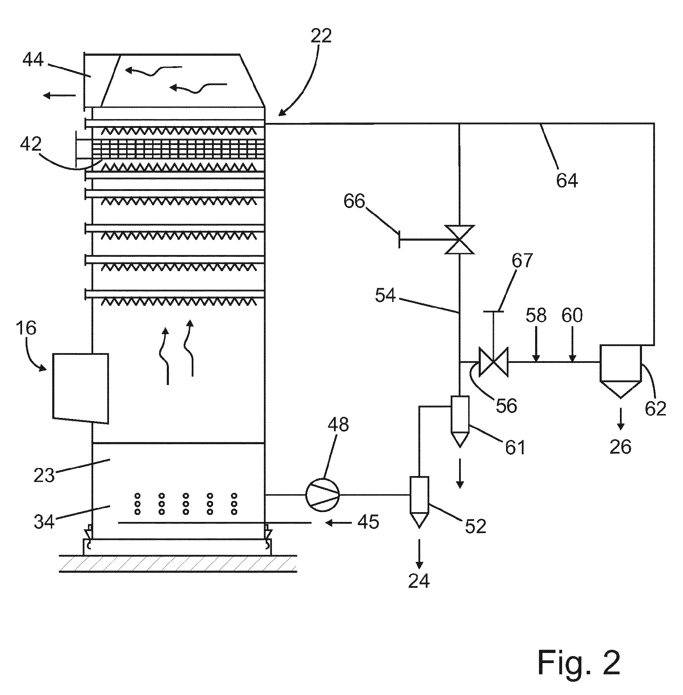

Die oben beschriebenen Mechanismen der Hg-Abscheidung mit einem Fällungsmittel führen zu einer Anreicherung des Fällungsmittel-Quecksilber-Komplexes in der Waschflüssigkeit. Um zu verhindern, dass daraus negative Auswirkungen auf die Gipsqualität folgen, ist eine gezielte Senkung des Hg-Inventars in der Waschflüssigkeit erforderlich. Außerdem wird durch die Absenkung des Quecksilberniveaus in der Waschflüssigkeit 23 das treibende Gefälle für die erwünschten Reaktionen des Quecksilbers größer, so dass diese bevorzugt ablaufen und in Folge dessen die Abscheiderate erhöht wird.
Zu diesem Zweck sollten die vorhandenen Anlagen, wie in Figur 2 dargestellt, apparativ ergänzt werden. Die Kombination dieser ergänzenden Apparate wird im Folgenden REA-Waschwasseraufbereitungsanlage (RWA) genannt. Die Funktionsweise einer RWA mit zweistufiger Abtrennung von Gips aus der Waschflüssigkeit 23, umfassend eine Umwälzpumpe 48, einen Abscheider 52, einen zweiten Abscheider 61, die als Hydrozyklon ausgeführt sein können, sowie einen dritten Abscheider 62 (ausgeführt als Eindicker), die erste Dosierstelle 58, die zweite Dosierstelle 60 sowie die Absperrarmaturen 66 und 67, ist wie folgt:
Die Umwälzpumpe 48 fördert die mit dem Quecksilber-Fällungsmittel-Komplex beladene Waschflüssigkeit 23 aus dem Wäschersumpf 34 zum ersten Abscheider 52. Im ersten Abscheider 52 wird der in der Waschflüssigkeit 23 enthaltene Feststoff (Gips) in der Regel so abgeschieden, dass im Unterlauf verwertbarer Gips vorliegt. Im zweiten Abscheider 61 erfolgt die Feststoffabtrennung so, dass der Oberlauf des Abscheiders 61 nur noch sehr geringe Feststoffanteile enthält. Diese bestehen überwiegend aus Schmutzpartikeln. Der Oberlauf enthält auch den Quecksilber-Fällungsmittel-Komplex.

Der aus dem zweiten Abscheider 61 austretenden Waschflüssigkeit 23 kann optional an der ersten Dosierstelle 58 Fällungsmittel zudosiert werden, um ggf. noch vorhandene Quecksilberionen zu komplexieren. An der zweiten Dosierstelle 60 wird ein Flockungshilfsmittel zugegeben, durch das die entstandenen schwerlöslichen Quecksilberverbindungen zusammen mit den in der Waschflüssigkeit 23 vorhandenen Schmutzpartikeln zu einem quecksilberhaltigen Schlamm koagulieren (Flockung).

Die quecksilberhaltige Waschflüssigkeit wird im nachfolgenden dritten Abscheider 62 aus der Waschflüssigkeit 23 abgeschieden und am Unterlauf als Dünnschlamm aus dem Prozess ausgeschleust. Dieser Dünnschlamm kann zur weiteren Behandlung gängigen Abwasseraufbereitungsanlagen zugeführt werden. Die gereinigte Waschflüssigkeit 23 wird beispielhaft zur Spülung des Tropfenabscheiders 42 in den Prozess zurückgegeben.

Auf diese Weise wird erreicht, dass das aus dem Rauchgas 16 abgeschiedene Quecksilber nicht am Calciumsulfat (Gips) 24 adsorbiert, sondern zusammen mit dem Abwasserschlamm 26 aus dem Prozess ausgetragen wird. Außerdem wird durch die Absenkung des Quecksilberniveaus in der Waschflüssigkeit 23 das treibende Gefälle für die erwünschten Reaktionen des Quecksilbers größer, so dass diese bevorzugt ablaufen und in Folge dessen die Abscheiderate erhöht wird.

Zur Behandlung in der RWA ist ein möglichst großer Massenstrom an Waschflüssigkeit 23 aus dem Wäschersumpf 34 abzuziehen.

Zwischen dem zweiten Abscheider 61 und dem Nasswäscher kann eine Leitung 54 mit einer Armatur 66 vorgesehen sein. In Verbindung mit der Armatur 67 in der Leitung 56 kann damit der Massestrom Waschflüssigkeit 23 zur RWA und die Abscheidung des Fällungsmittel-Quecksilber-Komplexes im gewünschten Maße beeinflusst werden.

Durch die erfindungsgemäße apparative Ergänzung, in Kombination mit der Additivdosierung in den Nasswäscher 22, wurde der Quecksilberstrom, welcher mit dem Abwasser aus dem Prozess abgeschieden wird, von ca. 6 % auf ca. 65 % (jeweils bezogen auf den Hg-Input) gesteigert. Hierbei wurde durch die apparative Ergänzung in Form einer RWA verhindert, dass das mittels Fällungsmitteldosierung in den Nasswäscher 22 zusätzlich abgeschiedene Quecksilber in den Gips gelangt. Dadurch liegen die Hg-Konzentrationen im Gips weiterhin in für REA-Gipse üblichen
Konzentrationsbereichen.

### Optimierte Betriebsweise

Eine verbesserte Quecksilberabscheidung wird durch die gezielte Einstellung von Betriebsparametern erreicht. Diese Einstellung kann sowohl mit als auch ohne den Einsatz von Additiven und zusätzlichen Apparaten genutzt werden.

Erfindungsgemäß wird das Redoxpotential im Wäschersumpf 34 durch die Anpassung der zugegebenen Oxidationsluftmengen auf einen anlagenspezifisch optimalen Wert eingestellt.

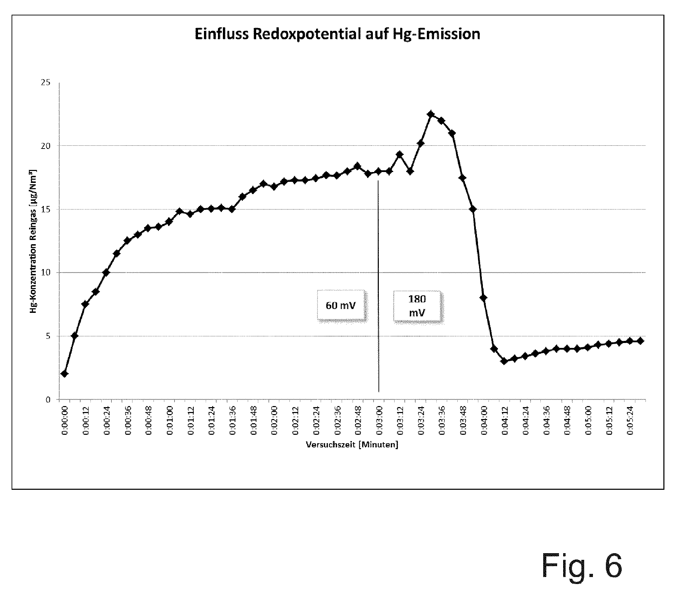

Im Laborversuch hat sich, wie in Figur 6 dokumentiert, der Bereich von 150 - 200 mV als optimal erwiesen. Bei einem Sauerstoffmassenstrom von 2,5 l/h stellte sich ein Redoxpotential von 60 mV ein. Dabei ergab sich das Ausgangsniveau der Hg(g)-Emission. Durch Erhöhung der Sauerstoffzugabe auf 4 l/h stieg das Redoxpotential auf 180 mV, wodurch die Hg(g)-Emission um ca. 75 % gesenkt wurde.

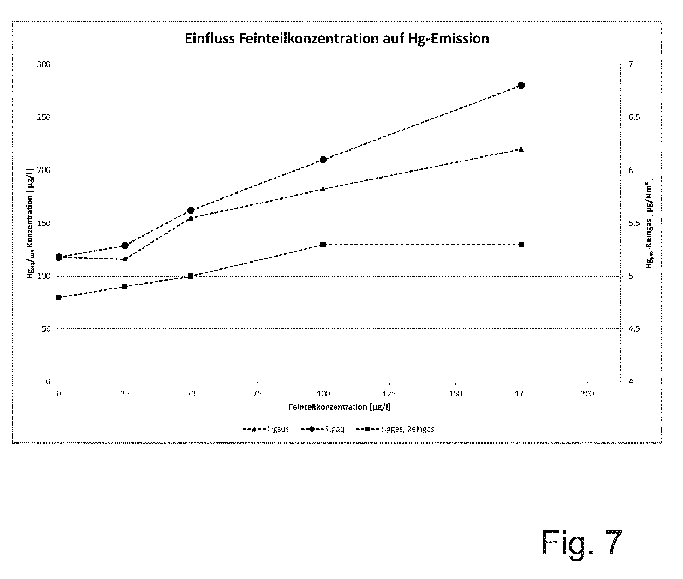

Erfindungsgemäß wird weiterhin die Feinteilkonzentration im Wäschersumpf 34 durch gezielte Ausschleusung von Feinteilen auf einen anlagenspezifisch optimalen Wert eingestellt. Hinsichtlich der Reduzierung der Hg(g)-Emissionen sollte das Feinteilvolumen, wie in Figur 7 dargestellt, möglichst gering sein, um ein niedriges Hg-Inventar in der REA-Suspension zu erreichen. Im praktischen Betrieb hat sich ein Feinteilvolumen in der REA von 20 - 30 mg/l als praktikabel erwiesen.

## Patentansprüche

1. Verfahren zur verbesserten Abscheidung von Quecksilber aus Rauchgasen in nassen
Rauchgasentschwefelungsanlagen durch gezielte Verminderung und Vermeidung der Reduktion von gelöstem Quecksilber zu elementarem Quecksilber, sowie durch gezielte Ausschleusung von Quecksilber aus dem Kreislauf einer nassen Rauchgasentschwefelungsanlage mit dem Ziel der Verminderung des Quecksilberinventars und dadurch eine im gesamten verbesserte und vor allem zuverlässige Abscheidung.

2. Verfahren nach vorangehendem Anspruch 1 **dadurch gekennzeichnet, dass** dem REA-Kreislauf Additive zugegeben werden.

3. Verfahren nach Anspruch 1 und 2 **dadurch gekennzeichnet, dass** durch die Additive eine Reduktion und damit eine Re-Emission von Hg⁰(g) verhindert wird.

4. Verfahren nach einem der vorhergehenden Ansprüche, **dadurch gekennzeichnet, dass** das Additiv eine Lösung ist, welche Trimercapto-s-triazin enthält.

5. Verfahren nach einem der vorhergehenden Ansprüche, **dadurch gekennzeichnet, dass** das Additiv kohlestämmige Asche (E-Filternasche), insbesondere Asche aus der Verbrennung von mitteldeutscher Braunkohle, umfasst.

6. Verfahren nach einem der vorhergehenden Ansprüche, **dadurch gekennzeichnet, dass** das Additiv die bei der Azetylen-Produktion entstehende Kalkmilch umfasst.

7. Verfahren nach einem der vorhergehenden Ansprüche, **dadurch gekennzeichnet, dass** das Additiv in die Waschsuspension (23) und möglichst nahe an der Sprühebene (40) zugegeben wird.

8. Verfahren nach einem der vorhergehenden Ansprüche, **dadurch gekennzeichnet, dass** als Regelgröße für die zugegebenen Additiv-Massenströme die im Reingas gemessene Quecksilberkonzentration genutzt wird.

9. Verfahren nach vorangegangenem Anspruch 1 **dadurch gekennzeichnet, dass** eine bestehende oder neu zu errichtende Rauchgasentschwefelungsanlage gezielt um Apparate (RWA) zur Ausschleusung von Quecksilber ergänzt wird.

10. Verfahren nach vorangegangenem Anspruch 1 und 9 **dadurch gekennzeichnet, dass** mit der RWA gezielt Feinteile aus dem Prozess ausgeschleust werden.

11. Verfahren nach vorangegangenem Anspruch 1, 9 und 10, **dadurch gekennzeichnet, dass** durch Dosierung von Additiven die Ausschleusung von Quecksilber mit den Feinteilen verbessert wird.

12. Verfahren nach vorangegangenem Anspruch 1 und 10 **dadurch gekennzeichnet, dass** Feinteilkonzentrationen von 20 bis 30 mg/l eingestellt werden.

13. Verfahren nach vorangegangenem Anspruch 1 **dadurch gekennzeichnet, dass** ein anlagenspezifisches Redoxpotential eingestellt wird.

14. Verfahren nach vorangegangenem Anspruch 1 und 13, **dadurch gekennzeichnet, dass** das eingestellte Redoxpotential im Bereich von 150 - 200 mV liegt.
